# EUROPEAN PATENT APPLICATION

(11) **EP 4 841 968 A1**
(43) Date of publication of application: **18.11.2026**
(21) Application number: 25305693.1
(22) Date of filing: 15.05.2025
(51) Int. Cl.: H04N 9/68, G06T 5/92, H04N 1/60, H04N 9/77, H04N 9/67

(54) **SMART COLOR GAMUT CLIPPING WITH HUE PRESERVATION AND COMPATIBLE WITH SUPER-WHITE LEVELS**

(71) Applicant: InterDigital CE Patent Holdings, SAS, 75017 Paris (FR)
(72) Inventor: TOUZE, David, 35200 Rennes (FR); LE NAOUR, Robin, 35510 Cesson-Sévigné (FR); PLISSONNEAU, Frederic, 35235 Thorigne-Fouillard (FR)
(74) Representative: Interdigital

(57) **Abstract**

A method comprising:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
obtaining a first RGB pixel in the second color gamut from the first YUV pixel; and,
applying a clipping process to the first RGB pixel to obtain a second RGB pixel in the second color gamut;
wherein the clipping process comprises:
detecting (703, 704) that the first RGB pixel is in a range of values corresponding to super-whites;
determining (705) a scaling factor based on a difference between a maximum of components R, G and B of the first RGB pixel and a minimum of components R, G and B of the first RGB pixel; and,
for each component R, G and B of the first RGB pixel, applying (706) the scaling factor to the component to obtain a scaled component; and,
obtaining (707) a clipped component as a minimum between the scaled component and a maximum value of said component in the range of values corresponding to super-whites.

## Description

### 1. TECHNICAL FIELD

At least one of the present embodiments generally relates to the field of production of video and more particularly to a method, a device and a system for reducing issues introduced by a clipping in a conversion of a video content from a first color gamut to a second color gamut.

### 2. BACKGROUND

In order to ensure interoperability between video devices, many video systems comprise at least one conversion stage allowing for instance converting a YUV signal with a given Transfer function and given color gamut to a YUV signal with another transfer function and another color gamut

This is particularly true in a single stream HDR (High Dynamic Range)/SDR(Standard dynamic Range) system wherein a single stream allow distributing a SDR and a HDR version of the same content. For example, the standard SL-HDR1 (High-Performance Single Layer High Dynamic Range (HDR) System for use in Consumer Electronics devices; Part 1: Directly Standard Dynamic Range (SDR)Compatible HDR System (SL-HDR1); ETSI TS 103 433-1 VI.4.1 (2021-08*)*) allows transmitting a HDR version of a content in the form of a SDR version of the content with metadata allowing the conversion from SDR to HDR. Typically, the SDR version is using YUV "8" bits or "10" bits with a BT.709 transfer function and a BT.709 color gamut, as described in BT.709 recommendation *(*Recommendation ITU-R BT 709-6, Parameter values for the HDTV standards for production and international programme exchange, 06/2015)*.* The HDR on its side is generally using a YUV "10" bits or "12" bits with a PQ or HLG transfer function and a BT.2020 color gamut as described in BT.2100 recommendation (Recommendation ITU-R BT.2100-2, Image parameter values for high dynamic range television for use in production and international programme exchange, 07/2018)*.*

A conversion from HDR YUV data to SDR YUV data is typically called a tone mapping (TM) while the inverse conversion is typically called inverse tone mapping (ITM). A typical TM comprises a color gamut conversion of RGB values from a first color gamut to a second color gamut. Such conversion may require a clipping of the values outputted by the color gamut conversion to make sure that the output of the color gamut conversion fits well within the second color gamut. It has been observed that a basic clipping may create some issues when the basically clipped RGB values in the second color gamut are then converted in YUV values for the SDR YUV data.

It is desirable to overcome the above drawbacks.

It is particularly desirable to propose an improved gamut clipping method limiting the issues created by the basic gamut clipping method.

### 3. BRIEF SUMMARY

In a first aspect, one or more of the present embodiments provide a method comprising:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
   obtaining a first RGB pixel in the second color gamut from the first YUV pixel; and,
   applying a clipping process to the first RGB pixel to obtain a second RGB pixel in the second color gamut;
   wherein the clipping process comprises:
      detecting that the first RGB pixel is in a range of values corresponding to super-whites;
      determining a scaling factor based on a difference between a maximum of components R, G and B of the first RGB pixel and a minimum of components R, G and B of the first RGB pixel; and,
      for each component R, G and B of the first RGB pixel, applying (706) the scaling factor to the component to obtain a scaled component; and,
      obtaining a clipped component as a minimum between the scaled component and a maximum value of said component in the range of values corresponding to super-whites.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is equal to a maximum between the maximum range value and the maximum of components R, G and B of the first RGB pixel minus the maximum range value, the scaling factor is equal to the maximum between the maximum range value and the maximum of components R, G and B of the first RGB pixel.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is equal to zero, the scaling factor is equal to the maximum range value and applying (706) the scaling factor to the component to obtain a scaled component amounts at applying no scaling to the component to obtain the scaled component.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is between zero and a maximum between the maximum range value and the maximum of components R, G and B of the first RGB pixel minus the maximum range value, the scaling factor is based on an increasing function of the difference with values between the maximum range value and a maximum between the maximum range value and the maximum of components R, G and B of the first RGB pixel.

In an embodiment, each component of the first RGB pixel has a normalized value in a normalized linear light representation.

In a second aspect, one or more of the present embodiments provide a device comprising electronic circuitry configured for:
obtaining a first YUV picture in a first color gamut;
applying a conversion process to the first YUV picture to obtain a second YUV picture in a second color gamut, the first color gamut encompassing the second color gamut, the conversion process comprising for a first YUV pixel of the first YUV picture:
   obtaining a first RGB pixel in the second color gamut from the first YUV pixel; and,
   applying a clipping process to the first RGB pixel to obtain a second RGB pixel in the second color gamut;
   wherein the clipping process comprises:
      detecting that the first RGB pixel is in a range of values corresponding to super-whites;
      determining a scaling factor based on a difference between a maximum of components R, G and B of the first RGB pixel and a minimum of components R, G and B of the first RGB pixel; and,
      for each component R, G and B of the first RGB pixel, applying the scaling factor to the component to obtain a scaled component; and,
      obtaining a clipped component as a minimum between the scaled component and a maximum value of said component in the range of values corresponding to super-whites.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is equal to a maximum between the maximum range value and the maximum of components R, G and B of the first RGB pixel minus the maximum range value, the scaling factor is equal to the maximum between the maximum range value and the maximum of components R, G and B of the first RGB pixel.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is equal to zero, the scaling factor is equal to the maximum range value and applying (706) the scaling factor to the component to obtain a scaled component amounts at applying no scaling to the component to obtain the scaled component.

In an embodiment, the first RGB pixel is in the range of values corresponding to super-whites if at least one component of the first RGB pixel is higher than a maximum range value, the maximum range value defining a lower bound of the range of values corresponding to super-whites, and responsive to the difference is between zero and a maximum between the maximum range value and the maximum of components R, G and B of the first RGB pixel minus the maximum range value, the scaling factor is based on an increasing function of the difference with values between the maximum range value and a maximum between the maximum range value and the maximum of components R, G and B of the first RGB pixel.

In an embodiment, each component of the first RGB pixel has a normalized value in a normalized linear light representation.

In a third aspect, one or more of the present embodiments provide a non-transitory information storage medium storing program code instructions for implementing the method of the first aspect.

In a fourth aspect, one or more of the present embodiments provide a computer program comprising program code instructions for implementing the method of the first aspect.

### 4. BRIEF SUMMARY OF THE DRAWINGS

Fig. 1A illustrates schematically an example of context in which various embodiments are implemented;
Fig. 1B illustrates a two-dimensional (2D) representation of the BT.709 color gamut and of the BT.2020 color gamut;
Fig. 1C illustrates a process executed by a tone mapping module;
Fig. 1D illustrates schematically a gamut clipping;
Fig. 1E illustrates a gamut mapping;
Fig. 1F illustrates schematically a process executed by a color gamut conversion module comprised in an inverse tone mapping module;
Fig. 1G illustrates schematically a process executed by a color gamut conversion module comprised in a tone mapping module;
Fig. 1H represents a waveform of an input image representing a luminance ramp;
Fig. 1I represents a waveform of an output image;
Fig. 1J illustrates a shift of a pixel in the CIE 1931 chromaticity diagram due to a basic clipping;
Fig. 1K illustrates a shift of a pixel in the CIE 1931 chromaticity diagram due to a basic clipping;
Fig. 2A illustrates schematically an example of hardware architecture of a processing module able to implement various aspects and embodiments;
Fig. 2B illustrates a block diagram of an example of a first system in which various aspects and embodiments are implemented;
Fig. 2C illustrates a block diagram of an example of a second system in which various aspects and embodiments are implemented;
Fig. 3 illustrates a basic clipping curve;
Fig. 4 illustrates a process for converting first YUV data in a first color gamut into second YUV data in a second color gamut, the first color gamut encompassing the second color gamut;
Fig. 5 illustrates the conversion process executed during the process of Fig. 4;
Fig. 6 illustrates schematically a clipping process preventing hue shift when clipping;
Fig. 7 illustrates schematically a clipping process preventing hue shift and preserving super-white level signals when clipping;
Fig. 8 illustrates the first embodiment of a progressive intermediate scaling;
Fig. 9 illustrates the second embodiment of a progressive intermediate scaling;
Fig. 10 represents a waveform of an output image resulting from an application of the process of Fig. 7 on a luminance ramp;
Fig. 11 illustrates a first comparison of a basic clipping method and the clipping process of Fig. 7 in the CIE 1931 chromaticity diagram; and,
Fig. 12 illustrates a second comparison of a basic clipping method and the clipping process of Fig. 7 in the CIE 1931 chromaticity diagram.

### 5. DETAILED DESCRIPTION

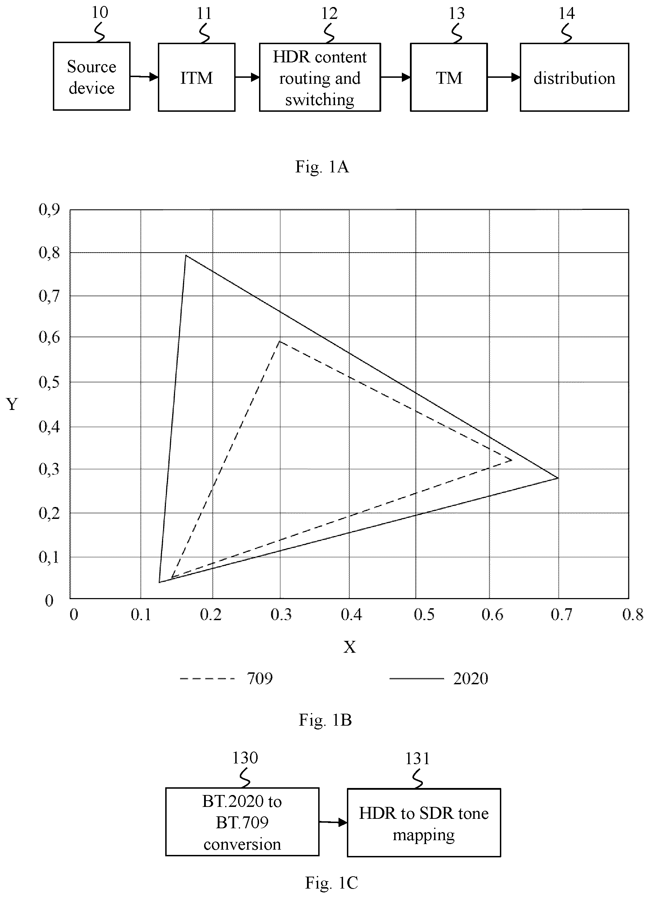

**Fig. 1A** illustrates an example of context in which the various embodiments are implemented.

In Fig. 1A, a source device 10 provides a video content to a ITM module 11. The source device 10 is for instance a SDR camera generating a SDR version of the video content. The SDR version corresponds to first YUV data *YUV*₁ with a first transfer function and a first color gamut. For example, the first YUV data *YUV*₁ are YUV "8" bits or "10" bits with a BT.709 transfer function (i.e., the first transfer function or first OETF) and a BT.709 color gamut (i.e., the first color gamut).

The ITM module 11 converts the first YUV data *YUV*₁ into second YUV data *YUV*₂ with a second transfer function and a second color gamut. The second YUV data *YUV*₂ are for example "10" bits or "12" bits HDR data with a PQ or HLG transfer function and a BT.2020 color gamut.

The second YUV data *YUV*₂ are then provided to a routing and switching module 12. The routing and switching module 12 is in charge of routing the second YUV data *YUV*₂ (i.e., te HDR data) to a TM module 13.

The TM module 13 converts the second YUV data into third YUV data *YUV*₃ with a third transfer function and a third color gamut. For example, the third transfer function is identical to the first transfer function and the third color gamut is identical to the first color gamut. Due to roundings and quantizations performed by the ITM and the TM modules, the third YUV data *YUV*₃ are SDR data corresponding to an approximation of the first YUV data *YUV*₁.

The third YUV data *YUV*₃ are then provided to a distribution module 14 in charge of distributing these data for example on a network. The distribution module 14 generally comprises an encoding module in charge of encoding the third YUV data *YUV*₃ representing a SDR version of the video content in a bitstream using a video compression format such as AVC ((ISO/CEI 14496-10 / ITU-T H.264), HEVC (ISO/IEC 23008-2 - MPEG-H Part 2, High Efficiency Video Coding / ITU-T H.265)), VVC (ISO/IEC 23090-3 - MPEG-I, Versatile Video Coding/ ITU-T H.266), AV1,VP9, EVC (ISO/CEI 23094-1 Essential Video Coding) or any other video compression format adapted to encode SDR video contents. The output of the encoding system is a bitstream representing the encoded third YUV data *YUV*₃.

In a single stream HDR/SDR system based on SL-HDR1, an additional module, not represented in Fig. 1A, generates SL-HDR1 metadata allowing converting SDR data in HDR data. These metadata are then provided along with the bitstream to a receiving system (not represented in Fig. 1A) for instance via a network. The receiving system can then decide to either decode and display only the SDR version of the video content or to decode the SDR version of the video content and to generate a reconstructed HDR version of the video content applying an ITM based on the SL-HDR1 metadata. The reconstructed HDR version of the video content is then displayed by the receiving system.

As explained in the document EBU R 103 (Recommendation EBU R 103, Video Signal Tolerance in Digital Television Systems, Version 3.0, 05/2020), the HDR and SDR content can be encoded with four different representations:
- Legal Range (or Narrow Range or Nominal Video Range). For "10" bits contents:
   ∘ Y is encoded in the range [64..940]; ranges [4..63] and [941..1019] are not used.
   ∘ U and V are encoded in the range [64..960]; ranges [4..63] and [961..1019] are not used.
- Full Range: For "10" bits contents:
   ∘ Y is encoded in the range [4..1019].
   ∘ U and V are encoded in the range [4..1019].
- Extended Range: This format uses the Legal Range (or Narrow Range or Nominal Video Range) signals for the useful video signal and uses two extended ranges (Sub-Blacks and Super-Whites) for extra usage. For "10" bits contents:
   ∘ Useful video signal:
      ▪ Y is encoded in the range [64..940].
      ▪ U and V are encoded in the range [64..960].
   ∘ Sub-Blacks: Y is encoded in the range [4..63] and can be typically used for monitor calibration.
   ∘ Super-Whites: Y is encoded in the range [941..1019] range and can be typically used for extra dynamic range signaling. One can note that after application of an EOTF, the value "1019" corresponds to "1811" nits in HLG ("1.811" when normalized) and to "24077" nits in PQ ("24.077" when normalized).

**Fig. 1B** illustrates a two-dimensional (2D) representation of the BT.709 color gamut and of the BT.2020 color gamut. A color gamut is generally represented by a volume in a three-dimensional (3D) space but to facilitate the understanding, color gamuts are represented in a 2D space in Fig. 1B. As can be seen the BT.2020 color gamut is wider than (i.e. encompasses) the BT.709 color gamut.

As seen above in relation to Fig. 1A, the TM module 13 typically obtains a HDR content with a BT.2020 color gamut from which it generates a SDR content with a BT.709 color gamut.

**FIG. 1C** illustrates a process executed by the TM module 13.

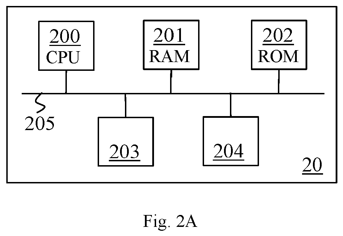

The process of Fig. 1C is for example executed by a processing module 20 of the TM module 13 described later in relation to Fig. 2A.

In a step 130, the processing module 20 transforms the HDR in the BT.2020 color gamut in a HDR content in the BT.709 color gamut.

In a step 131, the processing module 20 transforms the HDR content in the BT.709 color gamut in SDR content in a BT.709 color gamut.

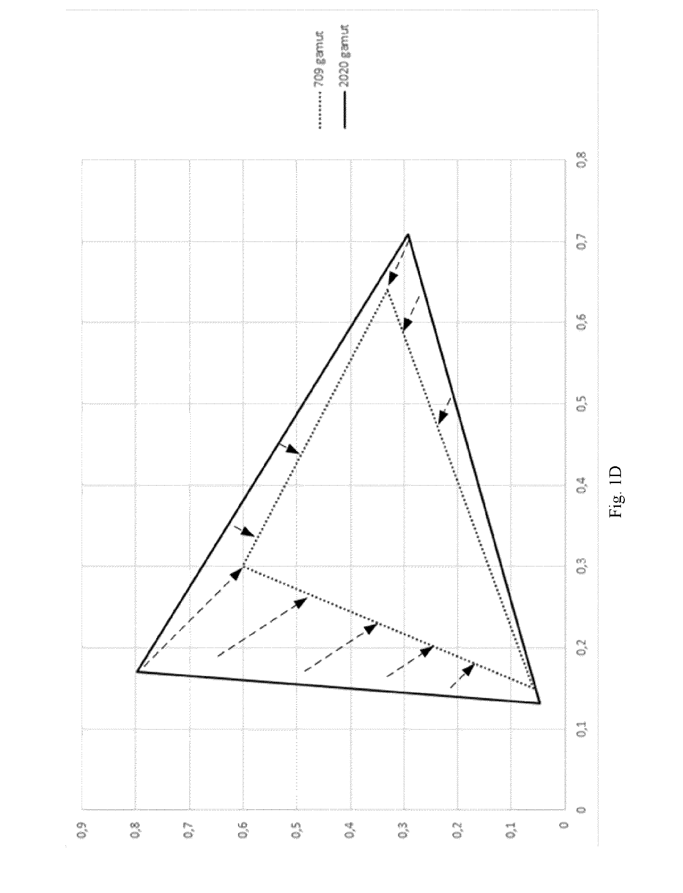

Various types of transforms may be applied during step 130. In a first example, this transform is a gamut clipping. When applying a gamut clipping, all pixels within the BT.709 color gamut are unchanged and all pixels that are between the BT.709 color gamut and the BT.2020 color gamut are mapped to the border of the BT.709 color gamut as shown in Fig. 1D.

**Fig. 1D** illustrates schematically a gamut clipping.

Gamut clipping may introduce some artefacts such as lack of details (many different pixels within the BT.2020 color gamut are mapped to the same pixels at the BT.709 color gamut's border) or color shifts between original pixels in the BT.2020 color gamut and resulting clipped pixels on the BT.709 color gamut's border. On the other hand, gamut clipping generally produces well saturated images.

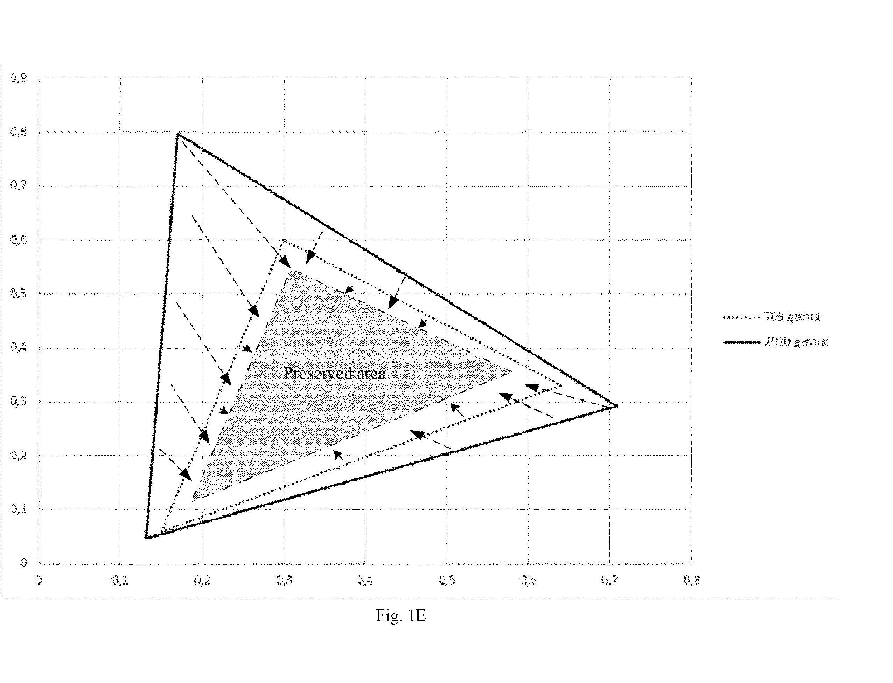

In a second example, the transform may be a gamut mapping. When applying gamut mapping, a preserved area is defined within the BT.709 color gamut. All pixels within the preserved area within the BT.709 color gamut are unchanged. All the pixels between the preserved area within the BT.709 color gamut and the BT.2020 color gamut are mapped between the preserved area within the BT.709 color gamut and the BT.709 color gamut as shown in Fig. 1E.

**Fig. 1E** illustrates a gamut mapping.

Gamut mapping generally resolves the issues introduced by the gamut clipping: lack of details and, if well designed, color shifts between the original pixel in the BT.2020 color gamut and resulting clipped pixel on the BT.709 color border. On the other hand, gamut mapping may produce less saturated images than gamut clipping, and gamut mapping is far more complex to implement.

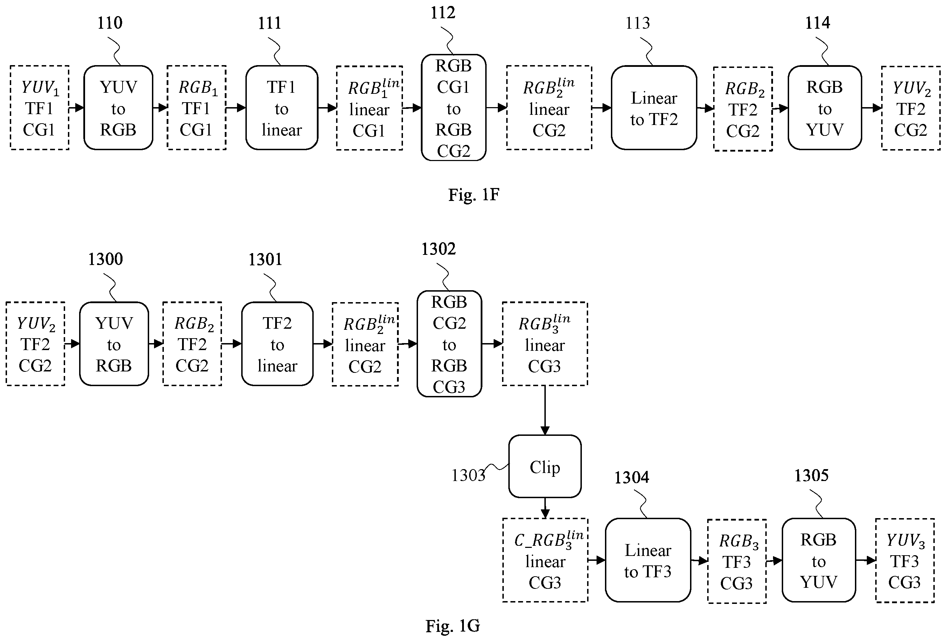

**Fig. 1F** illustrates schematically a process executed by a color gamut conversion module comprised in the ITM module 11.

The process of Fig. 1F is for example implemented by a processing module 20 of the ITM module 11, the processing module 20 being described later in relation to Fig. 2A.

In the example of Fig. 1F, the first YUV data *YUV*₁ were encoded or generated with a transfer function TF1 and a color gamut CG1. The second YUV data *YUV*₂ have a transfer function TF2 and a color gamut CG2.

In a step 110, the processing module 20 converts the YUV data *YUV*₁ (with a transfer function TF1 and a color gamut CG1) into RGB data *RGB*₁ (with a transfer function TF1 and a color gamut CG1) using a YUV to RGB matrix dedicated to the color gamut CG1.

In a step 111, the processing module 20 converts the RGB data *RGB*₁ (with a transfer function TF1 and a color gamut CG1) to RGB data ${RGB}_{1}^{lin}$ (in the linear domain with no transfer function and a color gamut CG1) using a non-linear converter dedicated to the TF1 to linear transform.

In a step 112, the processing module 20 converts the RGB data ${RGB}_{1}^{lin}$ (in the linear domain with no transfer function and a color gamut CG1) to RGB data ${RGB}_{2}^{lin}$ (in the linear domain with no transfer function and a color gamut CG2) using a RGB to RGB matrix dedicated to the CG1 to CG2 color gamut transform.

In a step 113, the processing module 20 converts the RGB video ${RGB}_{2}^{lin}$ (in the linear domain with no transfer function and a color gamut CG2) to RGB data *RGB*₂ (with a transfer function TF2 and a color gamut CG2) using a non-linear converter dedicated to the linear to TF2 transform.

In a step 114, the processing module 20 converts the RGB data *RGB*₂ (with a transfer function TF2 and a color gamut CG2) to YUV data *YUV*₂ (with a transfer function TF2 and a color gamut CG2) using a RGB to YUV matrix dedicated to the color gamut CG2.

Gamut clipping is generally realized on RGB components in the linear light domain. The RGB components are obtained using the typical conversion process depicted in Fig. 1G.

**Fig. 1G** illustrates schematically a process executed by a color gamut conversion module comprised in the TM module 13.

Fig. 1G is a more detailed version of the step 130 of Fig. 1C.

The process of Fig. 1G is for example implemented by a processing module 20 of the TM module 13.

In the example of Fig. 1G, the processing module 20 of the TM module 13 obtains the second YUV data *YUV*₂ from the ITM module 11 via the HDR content routing and switching module 12.

In a step 1300, the processing module 20 converts the YUV data *YUV*₂ (with the transfer function TF2 and the color gamut CG2) into RGB data *RGB*₂ (with the transfer function TF2 and a color gamut CG2) using a YUV to RGB matrix dedicated to the color gamut CG2.

In a step 1301, the processing module 20 converts the RGB data *RGB*₂ (with a transfer function TF2 and the color gamut CG2) to RGB data ${RGB}_{2}^{lin}$ (in the linear domain with no transfer function and the color gamut CG2) using a non-linear converter dedicated to the TF2 to linear transform.

In a step 1302, the processing module 20 converts the RGB data ${RGB}_{2}^{lin}$ (in the linear domain with no transfer function and the color gamut CG2) to RGB data ${RGB}_{3}^{lin}$ (in the linear domain with no transfer function and a color gamut CG3) using a RGB to RGB matrix dedicated to the CG2 to CG3 color gamut transform.

In a step 1303, the processing module 20 applies a gamut clipping to the RGB data ${RGB}_{3}^{lin}$ (in the linear domain with no transfer function and the color gamut CG3), to produce RGB data $C _ {RGB}_{3}^{lin}$ (in the linear domain with no transfer function and the color gamut CG3).

In a step 1304, the processing module 20 converts the RGB video $C _ {RGB}_{3}^{lin}$ (in the linear domain with no transfer function and a color gamut CG3) to RGB data *RGB*₃ (with the transfer function TF3 and a color gamut CG3) using a non-linear converter dedicated to the linear to TF3 transform.

In a step 1305, the processing module 20 converts the RGB data *RGB*₃ (with the transfer function TF3 and a color gamut CG3) to YUV data *YUV*₃ (with the transfer function TF3 and the color gamut CG3) using a RGB to YUV matrix dedicated to the color gamut CG3.

Generally, the conversions of steps 110, 111, 112, 113, 114 and 1300, 1301, 1302, 1304, 1305 are done in floating-point format for a better accuracy. At the end of the processes of Figs. 1F and 1G, a quantization is applied to the YUV data *YUV*₂ and *YUV*₃ (in floating point values) into YUV "8", "10" or "12" bits fix-point values.

In an example, the transfer function TF1 and TF3 are BT.1886 (as described in document Recommendation ITU-R BT.1886-0, Reference electro-optical transfer function for flat panel displays used in HDTV studio production, 03/2011) or BT.709, the color gamuts CG1 and CG3 are BT.709, the transfer function TF2 is PQ or HLG and the color gamut CG2 is BT.2020.

In step 1302, as the color gamut CG2 (typically BT.2020) is broader than the color gamut CG3 (typically BT.709), a gamut clipping method is applied (in step 1303) to make sure that the RGB data resulting from the conversion from the color gamut CG2 to the color gamut CG3 fits well within the color gamut CG3 boundaries.

One can note that, for questions of consistency of colors, the ITM module 11 may produce a HDR content in the color gamut CG2 (for example BT.2020) but with colors limited to the color gamut CG1 (for example BT.709). Therefore, the gamut clipping is appropriate in the TM module 13.

Supposing that the RGB data ${RGB}_{3}^{lin}$ are normalized values, a basic gamut clipping (or basic clipping) method may be the following:$C _ R _ P _ {RGB}_{3}^{lin} = Max \left(0, Min\left(1, R_P_{RGB}_{3}^{lin}\right)\right)$$C _ G _ P _ {RGB}_{3}^{lin} = Max \left(0, Min\left(1, G_P_{RGB}_{3}^{lin}\right)\right.$$C _ B _ P _ {RGB}_{3}^{lin} = Max \left(0, Min\left(1, B_P_{RGB}_{3}^{lin}\right)\right)$

Where $R _ P _ {RGB}_{3}^{lin}$ (respectively $G _ P _ {RGB}_{3}^{lin} , B _ P _ {RGB}_{3}^{lin}$) represents the component R (respectively G, B) of a pixel $P _ {RGB}_{3}^{lin}$ of the RGB data ${RGB}_{3}^{lin}$, $C _ R _ P _ {RGB}_{3}^{lin}$ (respectively $C _ G _ P _ {RGB}_{3}^{lin} , C _ B _ P _ {RGB}_{3}^{lin}$) represents the component R (respectively G, B) of a pixel $C _ P _ {RGB}_{3}^{lin}$ of the RGB data $C _ {RGB}_{3}^{lin}$, *Max(x,y)* takes the maximum of *x* and *y* and *Min(x,y)* takes the minimum of *x* and*y*.

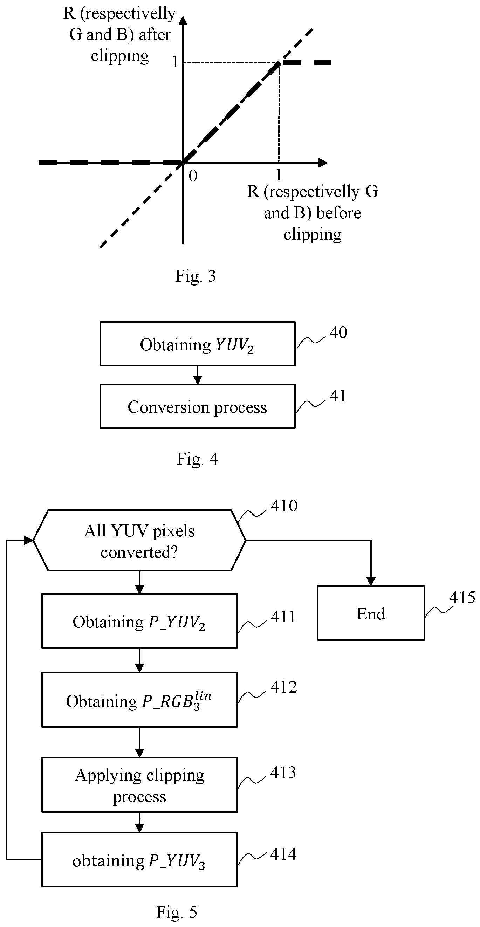

**Fig. 3** illustrates a basic clipping.

However, when applying such a basic clipping method, two issues may occur:
- Issue "1": the super-whites signals are removed.
- Issue "2": as mentioned in the Recommendation BT.2407 *(Recommendation ITU-R BT.2407-0, Colour gamut conversion from Recommendation ITU-R BT.2020 to Recommendation ITU-R BT.709, 10*/*2017)* section 2.4, some color shift issues may appear on the components $C _ R _ P _ {RGB}_{3}^{lin} , C _ R _ P _ {RGB}_{3}^{lin}$ and $C _ R _ P _ {RGB}_{3}^{lin}$ and therefore subsequently on components *R_P_YUV*₃, *G_P_YUV*₃, *B_P_YUV*₃ of a pixel *P_YUV*₃ of the YUV data *YUV*₃.

To illustrate the issue "1", let's take an example of an application of the process of Fig. 1G to an input image representing a luminance ramp in HD format where each line of "1920" pixels is made with:
- Pixel i = 0 to 4: Y = 4, U = V = 512;
- Pixel i = 4 to 1019: Y = i, U = V = 512;
- Pixel i = 1020 to 1023: Y = 1019, U = V = 512;
- Pixel i = 1024 to 1027: Y = 4, U = V = 512;
- Pixel i = 1028 to 1919: Y = (i - 1024) (i.e. 4 to 895).

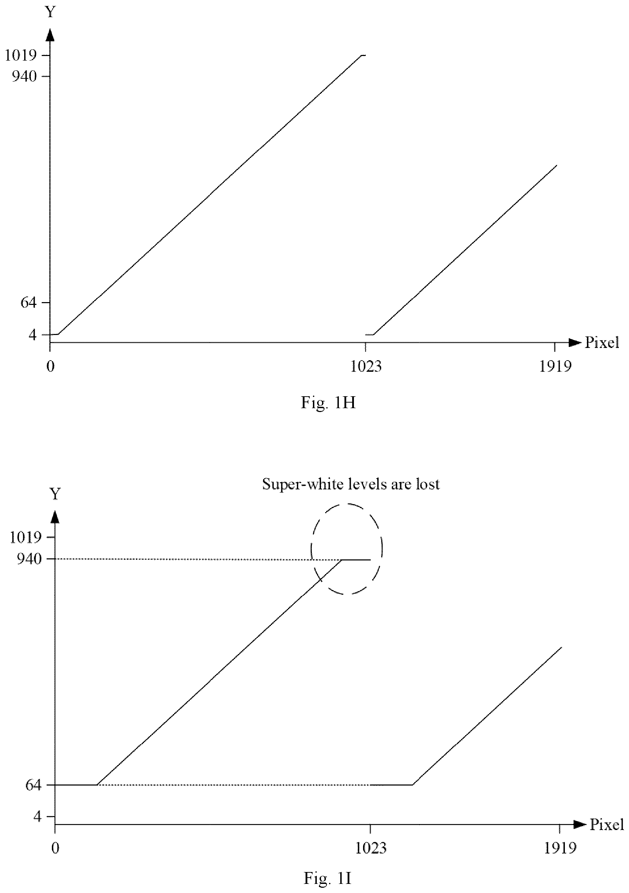

**Fig. 1H** represents a waveform of the Y component of the input image representing a luminance ramp.

**Fig. 1I** represents a waveform of the Y component of the output image resulting from an application of the process of Fig. 1G. We can clearly see that the super-white levels have been lost during the conversion. This is not acceptable and this needs to be resolved.

Regarding the issue 2, the color shift may happen when an input color of step 1302 (in the wider color gamut CG2) has the following characteristics:
- it fits within the output color gamut (i.e., the smaller color gamut CG3);
- it has one or more of its R, G and B components that is close to a maximum value (i.e., equal to "1" in a normalized linear light representation). In addition, step 1302 generates at least one output R, G or B value larger than the maximum value.
- it has one or more of its R, G and B components with a value that is far from a minimum value (i.e. equal to "0" in normalized linear light representation) and far from the maximum value. In addition, step 1302 generates at least one output R, G or B value within an acceptable range ( i.e., [0..1] in normalized linear light representation).

Let's take some examples with some RGB values which colors are represented in a CIE 1931 chromaticity diagram, with (x, y) coordinates. These (x, y) coordinates are computed from the RGB linear light components using the following steps:
- Step 1: step 1 is a step of conversion of RGB components into XYZ components using a RGB to XYZ matrix.
   When RGB components are in the BT.2020 space, the RGB to XYZ matrix is: $\left[\begin{matrix}X \\ Y \\ Z\end{matrix}\right] = \left[\begin{matrix}0.63696 & 0.14462 & 0.16888 \\ 0.2627 & 0.678 & 0.0593 \\ 0 & 0.02807 & 1.06099\end{matrix}\right] \left[\begin{matrix}R \\ G \\ B\end{matrix}\right]$
   When RGB components are in the BT.709 space, the RGB to XYZ matrix is: $\left[\begin{matrix}X \\ Y \\ Z\end{matrix}\right] = \left[\begin{matrix}0.41239 & 0.35758 & 0.18048 \\ 0.21264 & 0.71517 & 0.07219 \\ 0.01933 & 0.1192 & 0.95053\end{matrix}\right] \left[\begin{matrix}R \\ G \\ B\end{matrix}\right]$
- Step 2: step 2 is a step of conversion of XYZ components into (x, y) components using the following formulas: $x = X / \left(X+Y+Z\right)$ $y = Y / \left(X+Y+Z\right)$

Let's analyze steps 1302 and 1303.

The RGB BT.2020 to RGB BT.709 matrix is given below: $M = \left[\begin{matrix}1.660491 & - 0.58764 & - 0.07285 \\ - 0.12455 & 1.1329 & - 0.00835 \\ - 0.01815 & - 0.10058 & 1.11873\end{matrix}\right]$

### Example 1:

$R _ P _ {RGB}_{2}^{lin} = 1 , G _ P _ {RGB}_{2}^{lin} = 0.2$ and $B _ P _ {RGB}_{2}^{lin} = 0.11$, where $R _ P _ {RGB}_{2}^{lin}$ (respectively $G _ P _ {RGB}_{2}^{lin}$ and $B _ P _ {RGB}_{2}^{lin}$) is the component R (respectively G and B) of a pixel $P _ {RGB}_{2}^{lin}$ of the RGB data ${RGB}_{2}^{lin}$. In (x, y) coordinates: x = 0.565, y = 0.334.

The RGB BT.2020 to RGB BT.709 matrix produces the following RGB BT.709 components: $R _ P _ {RGB}_{3}^{lin} = 1.535 , G _ P _ {RGB}_{3}^{lin} = 0.1012 , B _ P _ {RGB}_{3}^{lin} = 0.085$, where $R _ P _ {RGB}_{3}^{lin}$ (respectively $G _ P _ {RGB}_{3}^{lin}$ and $B _ P _ {RGB}_{3}^{lin}$) is the component R (respectively G and B) of a pixel $P _ {RGB}_{3}^{lin}$ of the RGB data ${RGB}_{3}^{lin}$. In (x, y) coordinates: x = 0.565 - y = 0.334.

The basic clipping method produces the following RGB BT.709 components: $C _ R _ P _ {RGB}_{3}^{lin} = 1.0 , C _ G _ P _ {RGB}_{3}^{lin} = 0.1012 , C _ B _ P _ {RGB}_{3}^{lin} = 0.085$, where $C _ R _ P _ {RGB}_{3}^{lin}$ (respectively $C _ R _ P _ {RGB}_{3}^{lin}$ and $C _ R _ P _ {RGB}_{3}^{lin}$) is the component R (respectively G and B) of a pixel $C _ P _ {RGB}_{3}^{lin}$ of the clipped RGB data $C _ {RGB}_{3}^{lin}$. In (x, y) coordinates: x = 0.535 - y = 0.336.

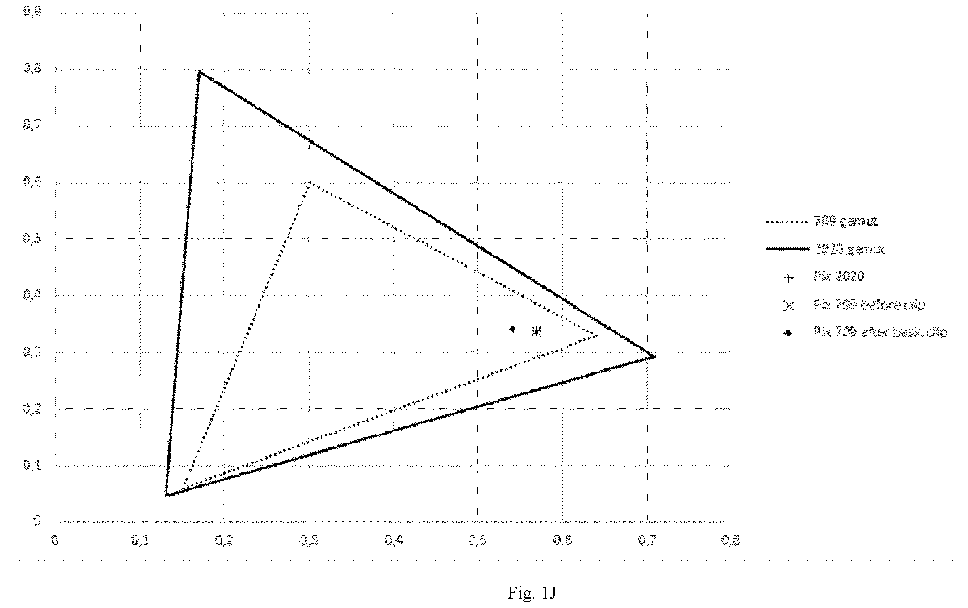

The plot of these "3" pixels in the CIE 1931 chromaticity diagram is given in Fig. 1J.

**Fig. 1J** illustrates a shift of a pixel in the CIE 1931 chromaticity diagram due to a basic clipping.

As can be seen in Fig. 1J, the original BT.2020 pixel and the converted BT.709 pixel before clipping are within the BT.709 color gamut and are matching. The clipped BT.709 pixel has shifted from the original BT.2020 pixel and the converted BT.709 pixel before clipping, producing a hue shift that is visible.

### Example 2:

$R _ P _ {RGB}_{2}^{lin} = 1 , G _ P _ {RGB}_{2}^{lin} = 0.2$ and $B _ P _ {RGB}_{2}^{lin} = 1$. In (x, y) coordinates: x = 0.3539, y = 0.194.

The RGB BT.2020 to RGB BT.709 matrix produces the following RGB BT.709 components: $R _ P _ {RGB}_{3}^{lin} = 1.4701 , G _ P _ {RGB}_{3}^{lin} = 0.0937 , B _ P _ {RGB}_{3}^{lin} = 1.0805$. In (x, y) coordinates: x = 0.3539, y = 0.194.

The basic clipping method produces the following RGB BT.709 components: $C _ R _ P _ {RGB}_{3}^{lin} = 1.0 , C _ G _ P _ {RGB}_{3}^{lin} = 0.0937 , C _ B _ P _ {RGB}_{3}^{lin} = 1.0$. In (x, y) coordinates: x = 0.3197, y = 0.1796.

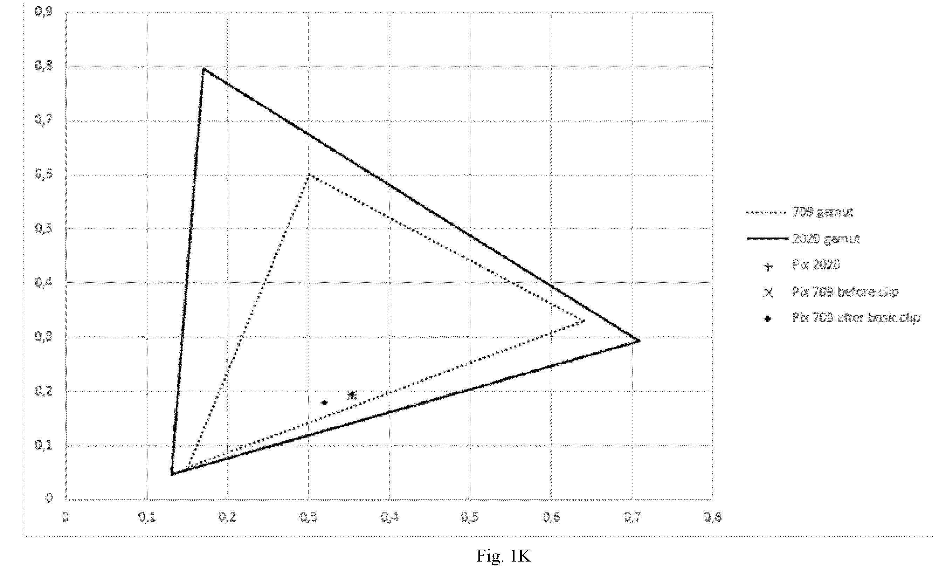

The plot of these "3" pixels in the CIE 1931 chromaticity diagram is given in Fig. 1K.

**Fig. 1K** illustrates a shift of a pixel in the CIE 1931 chromaticity diagram due to a basic clipping.

Again, in Fig. 1K, the original BT.2020 pixel and the converted BT.709 pixel before clipping are within the BT.709 color gamut and are matching. The clipped BT.709 pixel has shifted from the original BT.2020 pixel and the converted BT.709 pixel before clipping, producing a hue shift that is visible.

The various embodiments described below proposes a new clipping method compatible with the high-level part of the Extended Range content, i.e. that allows Super-White levels passthrough (i.e., super-white levels preservation), and that avoids hue shifts on the video signal, when converting video signal from a first color gamut (typically BT.2020) to a smaller second color gamut (typically BT.709) using gamut clipping.

**Fig. 2A** illustrates schematically an example of hardware architecture of a processing module 20 comprised at least in the ITM module 11, in the TM module 13 or in a receiving system.

The processing module 20 comprises, connected by a communication bus 205: a processor or CPU (central processing unit) 200 encompassing one or more microprocessors, general purpose computers, special purpose computers, and processors based on a multi-core architecture, as non-limiting examples; a random access memory (RAM) 201; a read only memory (ROM) 202; a storage unit 203, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 204 for exchanging data with other modules, devices, systems or equipment. The communication interface 204 can include, but is not limited to, a transceiver configured to transmit and to receive data over a communication network 21 (not represented in Fig. 2A). The communication interface 204 can include, but is not limited to, a modem or a network card.

For example, in the ITM module 11, the communication interface 204 enables the processing module 20 to receive YUV data *YUV*₁ and to output YUV data *YUV*₂. In the TM module 13, the communication interface 204 enables the processing module 20 to receive YUV data *YUV*₂ and to output YUV data *YUV*₃.

The processor 200 is capable of executing instructions loaded into the RAM 201 from the ROM 202, from an external memory (not shown), from a storage medium, or from a communication network. When the processing module 20 is powered up, the processor 200 is capable of reading instructions from the RAM 201 and executing them. These instructions form a computer program causing, for example, the implementation by the processor 200 of a process comprising the processes described in relation to Figs. 4, 5, 6 and 7.

All or some of the algorithms and steps of these processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). The processor 200, a DSP, a microcontroller, a FPGA and an ASIC are therefore examples of electronic circuitry adapted to implement (or configured for implementing) the processes described in relation to Figs. 4, 5, 6 and 7.

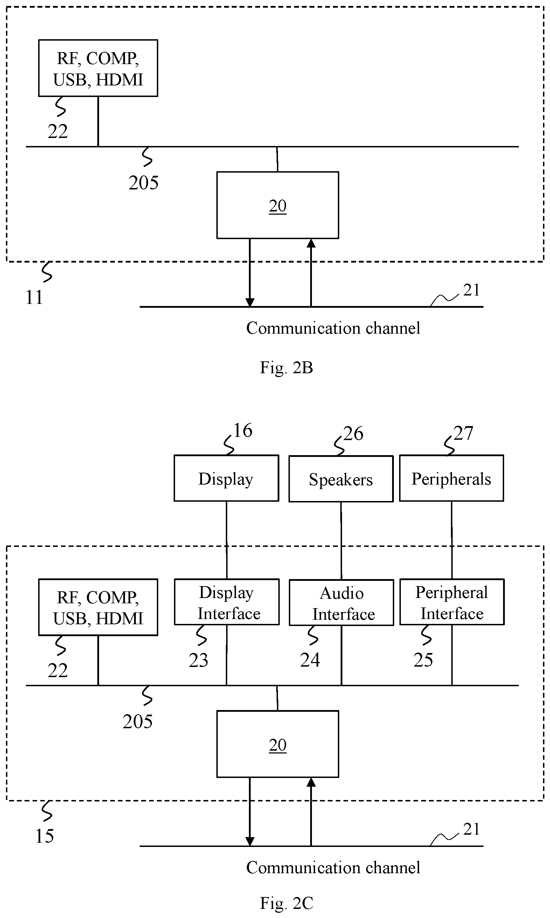

**Fig. 2C** illustrates a block diagram of an example of a receiving system in which various aspects and embodiments are implemented.

The receiving system can be embodied as a device including various components or modules and is configured to receive, for example, A bitstream comprising the SDR version of a video content along with SL-HDR1 metadata and to generate either a reconstructed SDR version of the video content or a reconstructed HDR version of the video content. Examples of such system include, but are not limited to, various electronic systems such as a personal computer, a laptop computer, a smartphone, a tablet, a television or a set top box. Components of the receiving system, singly or in combination, can be embodied in a single integrated circuit (IC), multiple ICs, and/or discrete components. For example, in at least one embodiment, the receiving system comprises one processing module 20 that implements all processes executed by the receiving system. In various embodiments, the receiving system is communicatively coupled to one or more other systems, or other electronic devices, via, for example, a communications bus or through dedicated input and/or output ports.

The input to the processing module 20 can be provided through various input modules as indicated in block 22. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in Fig. 2C, include composite video.

In various embodiments, the input modules of block 22 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting the receiving system to other electronic devices across USB and/or HDMI connections. It is to be understood that various aspects of input processing, for example, Reed-Solomon error correction, can be implemented, for example, within a separate input processing IC or within the processing module 20 as necessary. Similarly, aspects of USB or HDMI interface processing can be implemented within separate interface ICs or within the processing module 20 as necessary. The demodulated, error corrected, and demultiplexed stream is provided to the processing module 20.

Various elements of the receiving system can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the receiving system, the processing module 20 is interconnected to other elements of the receiving system by the bus 205.

The communication interface 204 of the processing module 20 allows the receiving system to communicate on the communication network 21. The communication network 21 can be implemented, for example, within a wired and/or a wireless medium.

Data is streamed, or otherwise provided, to the receiving system, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the receiving system using the RF connection of the input block 22. As indicated above, various embodiments provide data in a non-streaming manner, for example, when the receiving module is a smartphone or a tablet. Additionally, various embodiments use wireless networks other than Wi-Fi, for example a cellular network or a Bluetooth network.

The receiving system can provide an output signal to various output devices using the communication network 21 or the bus 205. For example, the receiving system can provide a video content to a display device 16.

The receiving system can provide an output signal to various output devices, including the display device 16, speakers 26, and other peripheral devices 27. The display device 16 includes one or more of, for example, a touchscreen display, an organic light-emitting diode (OLED) display, a curved display, and/or a foldable display. The display device 16 can be for a television, a tablet, a laptop, a smartphone (mobile phone), or other devices. The display device 16 can also be integrated with other components (for example, as in a smartphone or a tablet), or separate (for example, an external monitor for a laptop). The display device 16 is compatible with video contents generated by the receiving device. The other peripheral devices 27 include, in various examples of embodiments, one or more of a stand-alone digital video disc (or digital versatile disc) (DVR, for both terms), a disk player, a stereo system, and/or a lighting system. Various embodiments use one or more peripheral devices 27 that provide a function based on the output of the receiving system. For example, a disk player performs the function of playing the output of the receiving module.

In various embodiments, control signals are communicated between the receiving system and the display device 16, speakers 26, or other peripheral devices 27 using signaling such as AV.Link, Consumer Electronics Control (CEC), or other communications protocols that enable device-to-device control with or without user intervention. The output devices can be communicatively coupled to the receiving module via dedicated connections through respective interfaces. Alternatively, the output devices can be connected to the receiving module using the communication network 21 via the communication interface 204. The display device 16 and speakers 26 can be integrated in a single unit with the other components of the receiving module in an electronic device such as, for example, a television. In various embodiments, the display interface includes a display driver, such as, for example, a timing controller (T Con) chip.

The display device 16 and speakers 26 can alternatively be separate from one or more of the other components, for example, if the RF module of input block 22 is part of a separate set-top box. In various embodiments in which the display device 16 and speakers 26 are external components, the output signal can be provided via dedicated output connections, including, for example, HDMI ports, USB ports, or COMP outputs.

**Fig. 2B** illustrates a block diagram of an example of the ITM module 11 or the TM module 13 adapted to convert YUV video data with a first transfer function and in a first color gamut into YUV video data with a second transfer function and in a second color gamut in which various aspects and embodiments are implemented.

ITM module 11 (respectively TM module 13) can be embodied as a device including the various components and modules described above and is configured to perform one or more of the aspects and embodiments described in this document.

In an embodiment, the ITM module 11 and the TM module 13 are included in a same system.

Examples of such devices include, but are not limited to, various electronic devices such as personal computers, laptop computers, a camera, a smartphone and a server. Elements or modules of the ITM module 11 (respectively the TM module 13), singly or in combination, can be embodied in a single integrated circuit (IC), multiple ICs, and/or discrete components. For example, in at least one embodiment, the ITM module 11 (respectively the TM module 13) comprises one processing module 20 that implement a conversion of YUV video data with a first transfer function and in a first color gamut to YUV video data with a second transfer function and in a second color gamut. In various embodiments, the ITM module 11 (respectively the TM module 13) is communicatively coupled to one or more other systems, or other electronic devices, via, for example, a communications bus or through dedicated input and/or output ports.

The input to the processing module 20 can be provided through various input modules as indicated in block 22 already described in relation to Fig. 2C.

Various elements of the ITM module 11 (respectively the TM module 13) can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the ITM module 11 (respectively the TM module 13), the processing module 20 is interconnected to other elements of the ITM module 11 (respectively the TM module 13) by the bus 205.

The communication interface 204 of the processing module 20 allows the ITM module 11 (respectively the TM module 13) to communicate on the communication network 21. The communication network 21 can be implemented, for example, within a wired and/or a wireless medium.

Data is streamed, or otherwise provided, to the color gamut conversion module, in various embodiments, using a wireless network such as a Wi-Fi network, for example IEEE 802.11 (IEEE refers to the Institute of Electrical and Electronics Engineers). The Wi-Fi signal of these embodiments is received over the communications network 21 and the communications interface 204 which are adapted for Wi-Fi communications. The communications network 21 of these embodiments is typically connected to an access point or router that provides access to external networks including the Internet for allowing streaming applications and other over-the-top communications. Still other embodiments provide streamed data to the ITM module 11 (respectively the TM module 13) using the RF connection of the input block 22. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, smartphones (cell phones), portable/personal digital assistants ("PDAs"), tablets, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of" for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations or embodiments can produce a variety of signals formatted to carry information that can be, for example, stored or transmitted. The information can include, for example, instructions for performing a method, or data produced by one of the described implementations or embodiments. For example, a signal can be formatted to carry a video content in the first or the second format of a described embodiment. Such a signal can be formatted, for example, as an electromagnetic wave (for example, using a radio frequency portion of spectrum) or as a baseband signal. The formatting can include, for example, encoding a video content in the first or the second format in an encoded stream (or bitstream) and modulating a carrier with the encoded stream. The information that the signal carries can be, for example, analog or digital information. The signal can be transmitted over a variety of different wired or wireless links, as is known. The signal can be stored on a processor-readable medium.

Various embodiments may refer to a bitstream. Bitstreams include, for example, any series or sequence of bits, and do not require that the bits be, for example, transmitted, received, or stored.

The various embodiments below are related to gamut clipping in the context of High Dynamic Range video (and even Standard Dynamic Range) that uses super-white levels. Let's consider a device receiving a HDR video (or a SDR video), generally in "10" bits video format and in BT.2020 color gamut and using either PQ or HLG format (or BT.709/BT.1886 format). If this device needs to convert the BT.2020 color gamut video into a BT.709 color gamut video, as seen above, using a basic gamut clipping method may produce hue shift in the resulting BT.709 video. The various embodiments propose is a new gamut clipping method that prevents hue shifts, while still allowing super-white levels preservation (i.e., super-white levels passthrough).

The proposed solution defines a gamut clipping method that has two features:
- Feature 1: it does not introduce hue shift when clipping to the highest value 1;
- Feature 2: it allows super-white levels preservation, i.e. it does not clip to "1" any component that belong to a super-white signal.

**Fig. 4** illustrates a process for converting first YUV data in a first color gamut into second YUV data in a second color gamut, the first color gamut encompassing the second color gamut.

The process of Fig. 4 is for example executed by the processing module 20 of the TM module 13.

The first YUV data are for example the YUV data *YUV*₂ and the second YUV data are for example the YUV data *YUV*₃ described in relation to Fig. 1G.

In a step 40, the processing module 20 obtains the YUV data *YUV*₂.

In a step 41, the processing module 20 applies a conversion process to the YUV data *YUV*₂ to obtain the YUV data *YUV*₃.

**Fig. 5** illustrates the conversion process executed in step 41.

In a step 410, the processing module 20 determines if all pixels of the YUV data *YUV*₂ have been processed. If no, step 410 is followed by a step 411.

In step 411, the processing module 20 obtains a pixel *P_YUV*₂ of the YUV data *YUV*₂.

In a step 412, the processing module 20 applies steps 1300, 1301 and 1302 to obtain a pixel $P _ {RGB}_{3}^{lin}$ of the RGB data ${RGB}_{3}^{lin}$ from the pixel *P*_{*YUV*₂}.

In a step 413, the processing module 20 applies a gamut clipping method (corresponding to step 1303 in Fig. 1G) according to various embodiments described below to obtain a pixel $C _ P _ {RGB}_{3}^{lin}$ of the RGB data $C _ {RGB}_{3}^{lin}$ from the pixel $P _ {RGB}_{3}^{lin}$.

In a step 414, the processing module 20 applies steps 134 and 135 to obtain a pixel *P_YUV*₃ of the YUV data *YUV*₃.

Step 414 is followed by step 410 to continue with the next pixel of the YUV data *YUV*₂. If no pixel remains in the YUV data *YUV*₂ the processing module stops the conversion process.

As detailed earlier, the (x, y) coordinates of a pixel in the CIE 1931 chromaticity diagram are obtained using linear combinations from the R, G and B components in the linear light domain. This means that: if all the R, G and B components are modified by a common multiplication factor, the resulting (x, y) coordinates does not change, therefore the hue remains the same; if any of the R, G and B components is modified by a multiplication factor that is different from the other R, G or B components, then the (x, y) coordinates are modified, therefore introducing a hue shift.

To prevent any hue shift when clipping, the principle of feature 1 is therefore to apply the same multiplication factor on the "3" R, G and B components, whenever one or more of the R, G and B components are above "1". ${RGB}_{3}^{lin}$

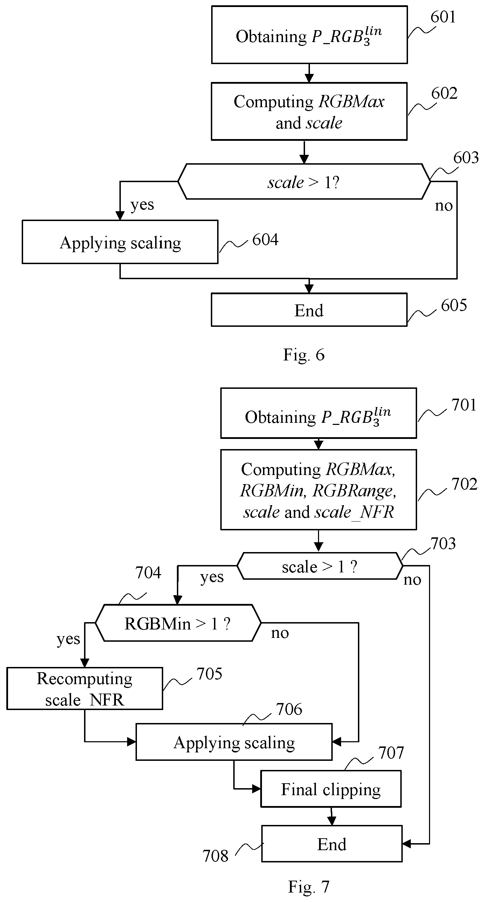

**Fig. 6** illustrates schematically a clipping process preventing hue shift when clipping.

The process of Fig. 6 is applied in step 413 on a pixel $P _ {RGB}_{3}^{lin}$ of the RGB data ${RGB}_{3}^{lin}$. The RGB data ${RGB}_{3}^{lin}$ are normalized, i.e., each component R, G or B of each pixel $P _ {RGB}_{3}^{lin}$ of the RGB data ${RGB}_{3}^{lin}$ is in a normalized linear light representation. A value in such normalized linear light representation should be in [0..1] if in legal range (i.e., between "64" and "940" for a component Y). In this range "0" is called *minimum range value min_range_value* and "1" is called *maximum range value max_range_value* in the following. However, sub-blacks and super-whites are out of this range.

In a step 601, the processing module 20 obtains a pixel $P _ {RGB}_{3}^{lin}$.

In a step 602, the processing module 20 determines a maximum *RGBMax* between the components R, G and B of the pixel $P _ {RGB}_{3}^{lin}$ and a scaling factor *scale* as a maximum between the maximum *RGBMax* and the maximum range value (i.e., "1"). $RGBMax = MAX \left(R_P_{RGB}_{3}^{lin},G_P_{RGB}_{3}^{lin},B_P_{RGB}_{3}^{lin}\right)$ where MAX(x,y,z) outputs the maximum of x, y and z. $scale = MAX \left(max_range_value,RGBMax\right)$ where MAX(x,y) outputs the maximum of x and y.

In a step 603, the processing module 20 determines if *scale* if greater than *max_range_value.*

If *scale > max_range_value*, the processing module 20 applies a scaling in a step 604 to the components R, G and B of the pixel $P _ {RGB}_{3}^{lin}$ by dividing each component by the scaling factor *scale* to obtain clipped components as follows: $C _ R _ P _ {RGB}_{3}^{lin} = R _ P _ {RGB}_{3}^{lin} / scale$ $C _ G _ P _ {RGB}_{3}^{lin} = G _ P _ {RGB}_{3}^{lin} / scale$ $C _ B _ P _ {RGB}_{3}^{lin} = R _ P _ {RGB}_{3}^{lin} / scale$

Step 604 is followed by a step 605 that ends the process.

If *scale = max_range_value*, the processing module 20 continues directly with step 605.

The process of Fig. 6 allows respecting feature 1, i.e., it prevents from hue shift when clipping. However, the process of Fig. 6 doesn't allow to respect the feature 2 which is to preserve the super-white level signals.

Super-white levels generally concern the luminance component Y and not the chrominance components U and V. In other words, for super-white levels, U and V are generally close to their achromatic value, i.e. value 512 in "10" bits coding (see Table 9 in document Recommendation ITU-R BT. 709-6, Parameter values for the HDTV standards for production and international programme exchange, 06/2015)*.* This also means that R and G and B values are equal. For detecting a super-white level signal, a very simple method consists in checking if the R, G and B components are all equal and above the maximum range value *max_range_value* (when the components R, G and B are normalized. The maximum range value *max_range_value* corresponds therefore to a lower bound of a range of values corresponding to the super-whites.

However, due to cumulative errors in the multiple quantization and transformation steps of any video system, some cases can appear where R, G and B values belonging to a super-white signal are not equal but relatively close to each other. Therefore, a pre-conditioning of the input R, G and B components should be introduced, before applying a clipping process. The pre-conditioning acts as a super-white level signal detector and is added to process of Fig. 6 to build a new gamut clipping strategy that is described hereafter.

**Fig. 7** illustrates schematically a clipping process preventing hue shift and preserving super-white level signals when clipping.

The process of Fig. 6 is applied in step 413 on a pixel $P _ {RGB}_{3}^{lin}$ of the RGB data ${RGB}_{3}^{lin}$. Again, the RGB data ${RGB}_{3}^{lin}$ are normalized.

In a step 701, the processing module 20 obtains a pixel $P _ {RGB}_{3}^{lin}$.

In a step 702, the processing module 20 determines a maximum *RGBMax* between the components R, G and B of the pixel $P _ {RGB}_{3}^{lin}$, a minimum *RGBMin* between the components R, G and B of the pixel $P _ {RGB}_{3}^{lin}$, a range value RGBRange, a first scaling factor *scale* as a maximum between the maximum *RGBMax* and the maximum range value *max_range_value* (*max_range_value =* 1 here), and a second scaling factor *scale_NFR* initialized to the value of *scale.* $RGBMax = MAX \left(R_P_{RGB}_{3}^{lin},G_P_{RGB}_{3}^{lin},B_P_{RGB}_{3}^{lin}\right)$ where MAX(x,y,z) outputs the maximum of x, y and z. $RGBMin = MIN \left(R_P_{RGB}_{3}^{lin},G_P_{RGB}_{3}^{lin},B_P_{RGB}_{3}^{lin}\right)$ where MIN(x,y,z) outputs the minimum of x, y and z. $RGBRange = RGBMax - RGBMin .$ $scale = MAX \left(max_range_value,RGBMax\right)$ where MAX(x,y) outputs the maximum of x and y.

In a step 703, the processing module 20 determines if *scale* is greater than the maximum range value *max_range_value.* Step 703 allows distinguishing between a pixel corresponding to a potential super-white level (*scale > max_range_value*) and a pixel not corresponding to a potential super-white level (*scale* ≤ *max_range_value*)*.* Pixel corresponding to a super-white level are in a range of values corresponding to super-whites.

If *scale* > *max_range_value*, the processing module 20 determines in a step 704, if the minimum *RGBMin* is greater than the maximum range value *max_range_value.*

If *RGBMin> max_range_value* in step 704, it is considered that the pixel $P _ {RGB}_{3}^{lin}$ corresponds to a super-white level. In order to process a super-white level, step 704 is followed by steps 705.

During step 705, the processing module 20 updates the second scaling factor *scale_NFR.* To do so, a maximum value of the RGB component in the super-white (i.e., in the range of super-white values) *NFRmax* is defined. As a component of a super-white signal has a maximum value, i.e. "24.077" for PQ or "1.811" for HLG, the maximum value *NFRmax* may be set to "24.077" when in PQ mode or "1.811" when in HLG mode, but another maximum value *NFRmax* may be chosen.

Then, to consider the cumulative errors in the multiple quantization and transformation steps of any video system, a progressive scaling is applied to the R, G and B components. If the difference between the highest value and the lowest value (i.e., *RGBRange*) is not null, then a scaling is applied to ensure a smooth transition between a super-white signal and non-super-white signal detection. Two extreme conditions are then defined:
- Extreme condition 1: When *RGBrange* is maximal (*RGBrange* equal to *scale - max_range_value*), then *scale_NFR = scale.* This ensures smooth transition between super-white signal and non-super-white signal;
- Extreme condition 2: if all the three R, G and B components are equal, i.e *RGBrange* is miminal (for instance *RGBrange* = 0) then no scaling is applied, i.e. scale factor *scale_NFR* = 1.

Between these two extreme conditions, a progressive intermediate scaling is applied.

In a first embodiment of a progressive intermediate scaling, the second scaling factor *scale_NFR = RGBRange + max_range_value* (eq. 1).

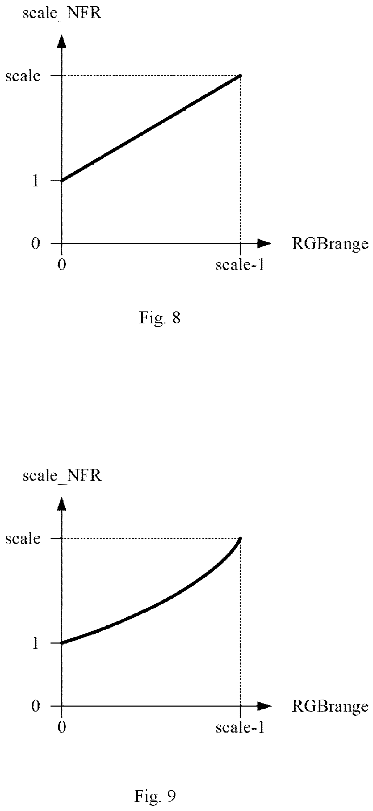

**Fig. 8** illustrates the first embodiment of a progressive intermediate scaling.

In a second embodiment of a progressive intermediate scaling, the second scaling factor *scale_NFR* is computed based on a power function.

**Fig. 9** illustrates the second embodiment of a progressive intermediate scaling.

In Fig. 9, the second scaling factor *scale_NFR* is computed as follows: $\begin{matrix}scale _ NFR = \left(scale-max_range_value\right) \times {\left(\frac{RGBRange}{scale - max _ range _ value}\right)}^{2} + \\ max _ range _ value\end{matrix}$ (eq. 2)

In summary, during step 705, if *RGBrange = scale - max_range_value* then *scale_NFR = scale*; Otherwise, if *RGBRange* = 0 then *scale_NFR = max_range_value*; otherwise, (*RGBRange* in [0 .. scale *- max_range_value*]) *scale_NFR* is determined by using for example equations eq. 1 or eq. 2 to ensure a progressive intermediate scaling.

After step 705, the processing module 20 continues with step 706.

If ≤ *max_range_value* in step 704, the processing module 20 continues with step 706.

During step 706, the processing module 20 applies a scaling to the components of the pixel $P _ {RGB}_{3}^{lin}$ as follows: $\overline{C _ R _ P _ {RGB}_{3}^{lιn}} = R _ P _ {RGB}_{3}^{lin} / scale _ NFR ;$ $\overline{C _ G _ P _ {RGB}_{3}^{lιn}} = G _ P _ {RGB}_{3}^{lin} / scale _ NFR ;$ $\overline{C _ B _ P _ {RGB}_{3}^{lιn}} = R _ P _ {RGB}_{3}^{lin} / scale _ NFR .$

Step 706 is followed by a step 707 during which a final clipping is applied as follows: $C _ R _ P _ {RGB}_{3}^{lin} = MIN \left(\overline{C _ R _ P _ {RGB}_{3}^{lιn}}, NFRmax\right) ;$ $C _ G _ P _ {RGB}_{3}^{lin} = MIN \left(\overline{C _ G _ P _ {RGB}_{3}^{lιn}}, NFRmax\right) ;$ $C _ B _ P _ {RGB}_{3}^{lin} = MIN \left(\overline{C _ B _ P _ {RGB}_{3}^{lιn}}, NFRmax\right) .$

Step 707 or step 703 when *scale* ≤ *max_range_value* are followed by a step 708 that ends the process.

The gamut clipping process of Fig. 7 has been tested on the luminance ramp of Fig. 1H and on different contents on which hue shift artefacts were appearing when using a basic clipping method. This new gamut clipping process is solving the hue shift artefacts issues and allows super-white levels preservation.

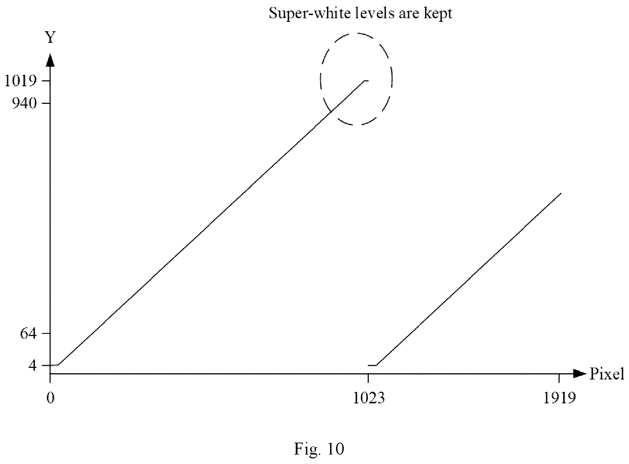

**Fig. 10** represents a waveform of the output image resulting from an application of the process of Fig. 7 on the luminance ramp of Fig. 1H.

As can be seen in Fig. 10, the super-white level signals are now preserved.

Going back to example 1 above ( $R _ P _ {RGB}_{2}^{lin} = 1 , G _ P _ {RGB}_{2}^{lin} = 0.2$ and $B _ P _ {RGB}_{2}^{lin} = 0.11$), the clipping process of Fig. 7 produces the following RGB BT.709 components: $C _ R _ P _ {RGB}_{3}^{lin} = 1.0 , C _ G _ P _ {RGB}_{3}^{lin} = 0.0659 , C _ B _ P _ {RGB}_{3}^{lin} = 0.055$. In (x, y) coordinates: x = 0.565, y = 0.334.

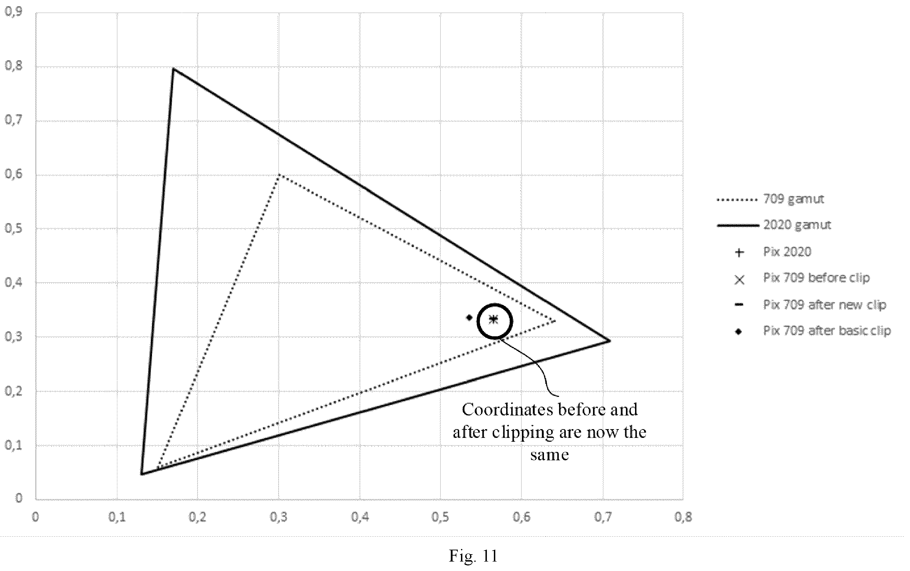

**Fig. 11** illustrates a first comparison of a basic clipping method and the clipping process of Fig. 7 in the CIE 1931 chromaticity diagram based on example 1.

Going back to example 2 above ( $R _ P _ {RGB}_{2}^{lin} = 1 , G _ P _ {RGB}_{2}^{lin} = 0.2$ and $B _ P _ {RGB}_{2}^{lin} = 1$), the clipping process of Fig. 7 produces the following RGB BT.709 components: $C _ R _ P _ {RGB}_{3}^{lin} = 1.0 , C _ G _ P _ {RGB}_{3}^{lin} = 0.0637 , C _ B _ P _ {RGB}_{3}^{lin} = 0.735$. In (x, y) coordinates: x = 0.3539, y = 0.194.

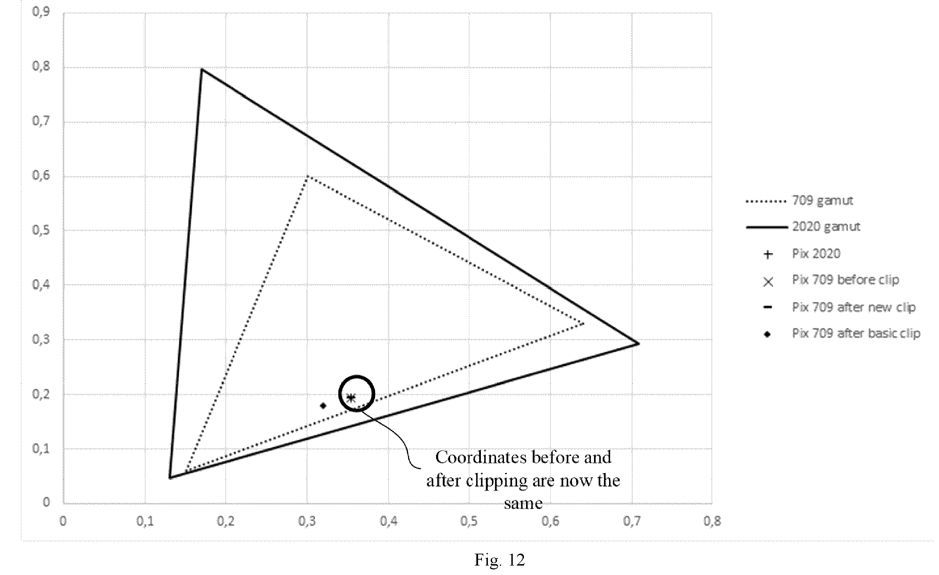

**Fig. 12** illustrates a second comparison of a basic clipping method and the clipping process of Fig. 7 in the CIE 1931 chromaticity diagram based on example 2.

In both examples, we clearly see on that figure that the original BT.2020 pixel and the converted BT.709 pixel before clipping are within the BT.709 color gamut and that there are matching. The BT.709 pixel after basic clipping has shifted from the original BT.2020 pixel and the converted BT.709 pixel before clipping, producing a hue shift that is very visible. The BT.709 pixel after the clipping process of Fig. 7 is now matching with the original BT.2020 pixel and the converted BT.709 pixel before clipping.

It should be noted that the various embodiments of a clipping method described above are also applicable to P3 contents into a BT2020 container. These embodiments are also applicable to other color management workflows such as the Academy Color Encoding System (ACES) that is characterized by other color spaces than BT.2020 or P3 or BT.709.

We described above a number of embodiments. Features of these embodiments can be provided alone or in any combination. Further, embodiments can include one or more of the following features, devices, or aspects, alone or in any combination, across various claim categories and types:
- A bitstream or signal that includes one or more of the described video content with converted color gamut using the proposed gamut clipping method, or variations thereof.
- Creating and/or transmitting and/or receiving and/or decoding a bitstream or signal that includes one or more of the described video content with converted color gamut using the proposed gamut clipping method, or variations thereof.
- A server, camera, TV, set-top box, cell phone, tablet, personal computer or other electronic device that performs at least one of the embodiments described.
- A TV, set-top box, cell phone, tablet, personal computer or other electronic device that performs at least one of the embodiments described, and that displays (e.g. using a monitor, screen, or other type of display) a resulting picture.
- A TV, set-top box, cell phone, tablet, personal computer or other electronic device that tunes (e.g. using a tuner) a channel to receive a signal including an encoded video content with converted color gamut, and performs at least one of the embodiments described.
- A TV, set-top box, cell phone, tablet, or other electronic device that receives (e.g. using an antenna) a signal over the air that includes a video content with converted color gamut, and performs at least one of the embodiments described.
- A server, camera, cell phone, tablet, personal computer or other electronic device that tunes (e.g. using a tuner) a channel to transmit a signal including a video content with converted color gamut, and performs at least one of the embodiments described.
- A server, camera, cell phone, tablet, personal computer or other electronic device that transmits (e.g. using an antenna) a signal over the air that includes a video content with converted color gamut, and performs at least one of the embodiments described.

## Claims

1. A method comprising:
obtaining (40) a first YUV picture in a first color gamut;
applying (41) a conversion process to the first YUV picture to obtain a second YUV picture in a second color gamut, the first color gamut encompassing the second color gamut, the conversion process comprising for a first YUV pixel of the first YUV picture:
obtaining (412) a first RGB pixel in the second color gamut from the first YUV pixel; and,
applying (413) a clipping process to the first RGB pixel to obtain a second RGB pixel in the second color gamut;
wherein the clipping process comprises:
detecting (703, 704) that the first RGB pixel is in a range of values corresponding to super-whites;
determining (705) a scaling factor based on a difference between a maximum of components R, G and B of the first RGB pixel and a minimum of components R, G and B of the first RGB pixel; and,
for each component R, G and B of the first RGB pixel, applying (706) the scaling factor to the component to obtain a scaled component; and,
obtaining (707) a clipped component as a minimum between the scaled component and a maximum value of said component in the range of values corresponding to super-whites.

2. The method of claim 1 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is equal to a maximum between the maximum range value and the maximum of components R, G and B of the first RGB pixel minus the maximum range value, the scaling factor is equal to the maximum between the maximum range value and the maximum of components R, G and B of the first RGB pixel.

3. The method of claim 1 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is equal to zero, the scaling factor is equal to the maximum range value and applying (706) the scaling factor to the component to obtain a scaled component amounts at applying no scaling to the component to obtain the scaled component.

4. The method of claim 1 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is between zero and a maximum between the maximum range value and the maximum of components R, G and B of the first RGB pixel minus the maximum range value, the scaling factor is based on an increasing function of the difference with values between the maximum range value and a maximum between the maximum range value and the maximum of components R, G and B of the first RGB pixel.

5. The method of any previous claim wherein, each component of the first RGB pixel has a normalized value in a normalized linear light representation.

6. A device comprising electronic circuitry configured for:
obtaining (40) a first YUV picture in a first color gamut;
applying (41) a conversion process to the first YUV picture to obtain a second YUV picture in a second color gamut, the first color gamut encompassing the second color gamut, the conversion process comprising for a first YUV pixel of the first YUV picture:
obtaining (412) a first RGB pixel in the second color gamut from the first YUV pixel; and,
applying (413) a clipping process to the first RGB pixel to obtain a second RGB pixel in the second color gamut;
wherein the clipping process comprises:
detecting (703, 704) that the first RGB pixel is in a range of values corresponding to super-whites;
determining (705) a scaling factor based on a difference between a maximum of components R, G and B of the first RGB pixel and a minimum of components R, G and B of the first RGB pixel; and,
for each component R, G and B of the first RGB pixel, applying (706) the scaling factor to the component to obtain a scaled component; and,
obtaining (707) a clipped component as a minimum between the scaled component and a maximum value of said component in the range of values corresponding to super-whites.

7. The device of claim 6 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is equal to a maximum between the maximum range value and the maximum of components R, G and B of the first RGB pixel minus the maximum range value, the scaling factor is equal to the maximum between the maximum range value and the maximum of components R, G and B of the first RGB pixel.

8. The device of claim 6 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is equal to zero, the scaling factor is equal to the maximum range value and applying (706) the scaling factor to the component to obtain a scaled component amounts at applying no scaling to the component to obtain the scaled component.

9. The device of claim 6 wherein, the first RGB pixel is in the range of values corresponding to super-whites if at least one component of the first RGB pixel is higher than a maximum range value, the maximum range value defining a lower bound of the range of values corresponding to super-whites, and responsive to the difference is between zero and a maximum between the maximum range value and the maximum of components R, G and B of the first RGB pixel minus the maximum range value, the scaling factor is based on an increasing function of the difference with values between the maximum range value and a maximum between the maximum range value and the maximum of components R, G and B of the first RGB pixel.

10. The device of any previous claim from claim 6 to 9 wherein, each component of the first RGB pixel has a normalized value in a normalized linear light representation.

11. Non-transitory information storage medium storing program code instructions for implementing the method of any previous claim 1 to 5.

12. A computer program comprising program code instructions for implementing the method of any previous claim 1 to 5.
